# FASCICULE DE BREVET EUROPEEN

(11) **EP 2 912 670 B1**
(45) Date de publication et mention de la délivrance du brevet: **07.12.2016**
(21) Numéro de dépôt: 13795829.4
(22) Date de dépôt: 28.10.2013
(51) Int. Cl.: G21F 9/00, B01D 59/10, G21F 9/30, B01D 53/14, B01D 59/00, B01D 59/28

(54) **TRAITEMENT THERMIQUE DE DÉCHETS CARBONÉS, PERFECTIONNÉ PAR LE CHOIX DES GAZ INJECTÉS**
WÄRMEBEHANDLUNG VON KOHLENSTOFFHALTIGEM ABFALL, VERBESSERT DURCH DIE WAHL VON EINGESPRITZTEN GASEN
HEAT TREATMENT OF CARBONACEOUS WASTE, IMPROVED BY THE CHOICE OF INJECTED GASES

(30) Priorité: 29.10.2012 FR 1260282
(43) Date de publication de la demande: 02.09.2015
(60) Demande divisionnaire: 16157028.8
(73) Titulaire: Electricité de France, 75008 Paris (FR)
(72) Inventeur: LAURENT, Gérard, F-69100 Villeurbanne (FR)
(74) Mandataire: Cabinet Plasseraud
(86) Numéro de dépôt international: PCT/FR2013/052567
(87) Numéro de publication internationale: WO 2014/068229

(56) Documents cités:
- EP-A1- 1 927 997
- FR-A1- 2 943 167
- US-A- 5 909 654

## Description

L'invention concerne une décontamination de matériau radioactif, dans le cadre du traitement de déchets nucléaires.

L'invention concerne plus particulièrement le traitement de déchets carbonés, notamment de graphite. Souvent, la réaction nucléaire est contenue et arrêtée dans les réacteurs par des chemises en graphite. En fin de vie, celles-ci doivent être traitées. Elles ont alors la forme de matrices de graphite contenant du carbone 14 (C14).

Ces formes radioactives du carbone doivent être isolées et stockées dans des conteneurs étanches. A cet effet, il convient de « casser » la matrice de graphite précitée pour en extraire en priorité l'isotope C14. Cette étape se fait habituellement à haute température. On fait précipiter ensuite cet isotope pour un stockage solide du résultat de cette réaction de précipitation (par exemple par une réaction à la chaux vive visant à l'obtention d'un composé de type CaCO₃).

Un traitement classique consiste en un reformage à la vapeur (ou « vaporéformage ») de la matrice de graphite, décrit par exemple dans le document US-6,625,248. Toutefois, la technique de ce document ne permet pas réellement d'isoler en premier lieu les isotopes C14 et C13 et d'assurer ainsi des rejets radioactifs acceptables.

Il a été proposé dans le document FR-2943167 une technique très prometteuse de traitement thermique permettant une séparation isotopique particulièrement efficace du carbone.

On peut aujourd'hui atteindre, par de telles techniques, une décontamination efficace pour le de tritium, le carbone 14 et une partie du chlore 36. Les autres radionucléides n'étant pas volatils, ils sont récupérés dans les résidus présents à l'issue d'une phase de vaporéformage.

Toutefois, pour que ces technologies aient un intérêt, il convient de définir judicieusement le choix des gaz de purge notamment pour avoir une décontamination du produit initial maximale associée à une perte de masse la plus faible possible. On entend par « gaz de purge » les gaz injectés dans le four de traitement thermique (ou « roaster ») lors de la phase de traitement thermique du graphite pour sa décontamination.

Cette décontamination doit être suffisamment efficace sans générer une trop forte perte de masse du graphite. En effet, la perte de masse du graphite génère des volumes de déchets secondaires (carbone 14 et chlore 36 enrichis dans une matrice minérale) qui sont couteux en termes de place pour le stockage, ce dernier devant se faire en couche géologique profonde (stockage profond).

En effet, ce qu'on appelle « graphite » ici vise un matériau utilisé dans les réacteurs dits UNGG pour « uranium naturel-graphite-gaz » ou MAGNOX ou AVR, comme modérateur du flux de neutrons. Il s'agit en réalité d'un ensemble de matériaux présentant des différences parfois marquées sur le plan structural, typiquement selon leur origine et par exemple des conditions opératoires (température, fluence, corrosion radiolytique, etc.) qui peuvent être différentes en centrales nucléaires, ces conditions opératoires ayant modifié leur structure. La variabilité de la réactivité de ces structures sous-tend la reproductibilité des performances.

De plus, outre le caractère structural d'origine des graphites utilisés dans les réacteurs gaz graphite, un certains nombre de paramètres influent sur sa réactivité et sa capacité à être décontaminé, dont notamment :
- La fluence, dont l'effet est déstructurant pour la matrice graphite : le graphite irradié n'est plus un graphite (en termes de cristallographie) et présente des désorganisations structurales et nanostructurales liées à l'irradiation (comme peuvent le montrer des images en microscopie électronique) ;
- La température, dont l'effet, pour des températures de l'ordre de 1000 °C et au-dessus, est cicatrisant vis-à-vis des déstructurations que peuvent générer des fluences élevées : un graphite moyennement irradié mais très chauffé peut se décontaminer moins bien qu'un graphite très irradié ;
- La corrosion radiolytique, qui produit un effet de décapage du graphite et suscite des décontaminations en réacteur du C14 ;
- La porosité : la taille des pores joue aussi un rôle.

Des pores nanométriques augmentent la probabilité de réaction avec les gaz de purge mais diminuent l'accessibilité aux sites actifs (là où se trouvent les isotopes radioactifs).

Des pores micrométriques diminuent la probabilité de réaction, mais augmentent l'accessibilité aux sites actifs.

Parmi d'autres paramètres influents, on peut citer l'influence de l'eau et la nature du coke d'origine.

Compte tenu de cette grande variabilité des graphites irradiés, et des corrélations entre calculs et mesures au niveau des inventaires radiologiques qui ont pu être établies, les paramètres dominants, pour le graphite irradié, sont typiquement :
- Le choix du gaz de purge utilisé en phase de traitement thermique ;
- Une grande hétérogénéité des distributions spatiales de la radioactivité ;
- La radioactivité devant se trouver majoritairement dans les zones les plus dégradées car ces zones sont les plus réactives : typiquement en bord de feuillet ou en interstitiel de la matrice graphite.

Il reste donc à optimiser le choix du ou des gaz de purge à injecter pendant le traitement thermique.

La présente invention vient améliorer la situation à cet effet.

Elle propose à cet effet un procédé de décontamination de matériau carboné radioactif, notamment de graphite, selon la revendication 1. Le procédé comporte une injection de vapeur d'eau dans ledit matériau, concomitamment à un premier traitement thermique de grillage du matériau à une température comprise entre 1200 et 1500°C, la vapeur d'eau étant injectée par des moyens d'injection de vapeur (M2) avec un agent fluidifiant gazeux, comportant de l'hydrogène H2, l'agent fluidifiant gazeux étant injecté par des moyens d'injection de l'hydrogène H2 (M3).

Avantageusement, la vapeur d'eau est injectée dans un réacteur dont la teneur en eau est mesurée pour contrôler la quantité de vapeur d'eau injectée, et, préalablement au premier traitement thermique précité, on prévoit un séchage du matériau pour contrôler la quantité d'eau présente dans le réacteur.

Dans une réalisation, le procédé comporte en outre un deuxième traitement thermique de grillage avec injection d'oxyde de carbone gazeux. Ce deuxième traitement peut être réalisé avant le premier traitement mais préférentiellement il est réalisé après. Par ailleurs, ce deuxième traitement, consistant en une oxydation douce selon la réaction de Boudouard, est très avantageux en soi et peut faire l'objet d'une protection séparée.

Préférentiellement, le deuxième traitement thermique est effectué à une température comprise entre 900 et 1100°C, avec une augmentation de la température jusqu'à environ 1100°C en fin dudit deuxième traitement thermique (par exemple avec une élévation de température d'environ 950°C jusqu'à 1100°C).

Préférentiellement, l'oxyde de carbone gazeux est dilué dans un gaz neutre (par exemple de l'azote) et, dans une réalisation, la dilution de l'oxyde de carbone gazeux augmente pendant le deuxième traitement thermique d'environ une proportion de 75% de gaz neutre à environ 90% de gaz neutre en fin de deuxième traitement thermique.

Préférentiellement, l'oxyde de carbone gazeux comporte du dioxyde de carbone, avec une proportion croissante de monoxyde de carbone, par exemple de 0 à environ 50% en fin de deuxième traitement thermique.

Dans un exemple de réalisation, il peut être prévu :
- une injection de dioxyde de carbone peu dilué (avec 25% de CO₂ et 75% d'azote par exemple) à une température de 900°C à 950°C, puis
- une injection de monoxyde de carbone et de dioxyde de carbone (en proportion de 50% et 50%) dilués à 10% dans 90% d'azote et à une température d'environ 1100°C.

Dans une forme de réalisation possible, il peut être prévu un troisième traitement thermique en fin de grillage du matériau par une élévation de température comprise entre 1500 et 1600°C.

Le grillage peut avantageusement être précédé d'un broyage du matériau en particules de diamètre compris entre 1 et 10 mm.

La présente invention vise aussi l'installation selon la revendication 14, permettant la mise en oeuvre du procédé ci-avant. L'installation comporte au moins un réacteur de traitement thermique (F) et au moins une entrée de gaz (M2) pour une injection de vapeur d'eau (au moins, étant entendu que d'autres gaz peuvent encore être injectés, notamment un oxyde de carbone) et des moyens d'injection de l'hydrogène H2 (M3) pour une injection d'un agent fluidifiant gazeux, comportant de l'hydrogène H2.

D'autres avantages et caractéristiques de l'invention apparaîtront à la lecture de la description d'exemples de réalisation donnés ci-après, et à l'examen des dessins annexés sur lesquels :
- la figure 1 illustre les principales étapes d'un procédé selon un exemple de réalisation de l'invention ;
- la figure 2 illustre un exemple d'installation pour la mise en oeuvre de ce procédé ;
- la figure 3 illustre une matrice de graphite comportant des plans de graphène avec des irrégularités de structure dans lesquelles la probabilité de présence de carbone 14 est élevée.

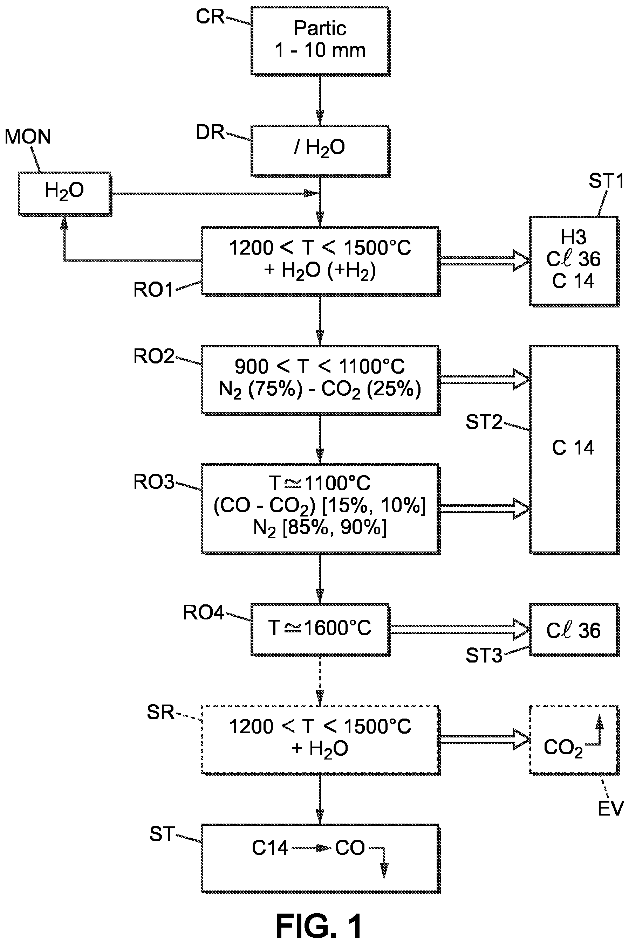

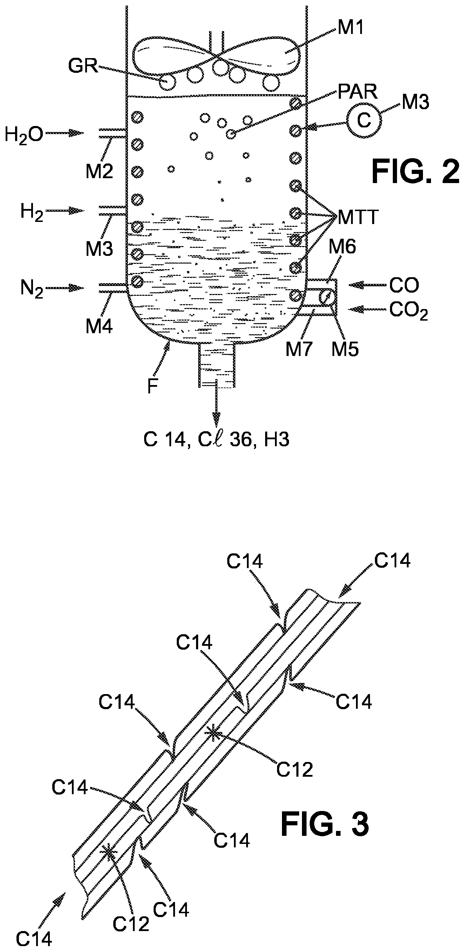

On se réfère tout d'abord à la figure 1 pour décrire un exemple de procédé de traitement de déchets radioactifs carbonés, incluant typiquement du graphite (des chemises de graphite étant utilisées habituellement autour d'un coeur de réacteur nucléaire pour absorber des neutrons issus de la réaction nucléaire). De tels déchets carbonés présentent des radionucléides qui sont typiquement l'isotope carbone 14 (C14), l'isotope chlore 36 (C136), et le tritium (H3). On cherche alors à isoler sélectivement ces isotopes, notamment par rapport à l'isotope naturel carbone 12 dans du graphite notamment. Ces isotopes, une fois isolés, participent chacun ensuite à une réaction de liquéfaction ou de solidification, pour être stockés dans des conteneurs destinés à être enterrés. On comprendra alors que l'étape d'isolation des isotopes radioactifs est cruciale pour limiter la quantité et, de là, le volume des produits à enterrer. En particulier, on cherche à limiter au strict minimum la quantité de carbone sous la forme de l'isotope naturel C12, tout en piégeant autant que possible l'isotope radioactif C14, dans les produits à enterrer. On comprendra alors que l'on cherche à éviter ce qui est appelé ci-après une « trop grande perte de masse » pendant les étapes du traitement décrit ci-après (étant entendu que la « masse perdue » devra être enterrée et/ou décontaminée par d'autres moyens). L'invention part alors de l'observation que, dans du graphite notamment, l'isotope radioactif C14 se trouve le plus souvent dans des irrégularités de la matrice que forment les différents plans de graphène successifs, par exemple en bordure de feuillets de plan de graphène. Cette observation s'explique par le fait que les neutrons, pendant l'impact avec les chemises de graphite, éjectent les atomes de carbone au-delà de leur position naturelle dans les plans de graphène de la matrice de graphite, créant des dislocations et plus généralement des irrégularités de structure. C'est ainsi que ces atomes de carbone, devenant des isotopes radioactifs C14, se retrouvent le plus probablement dans ces zones d'irrégularités de structure, alors que l'isotope naturel C12 reste constitutif du coeur des plans de graphène (figure 3).

En particulier, le graphite est broyé à l'étape CR pour former des particules de dimensions comprises typiquement entre 1 et 10 mm de diamètre moyen. Cette étape CR peut être réalisée dans un réacteur utilisé pour les étapes suivantes, ou en entrepôt. Il est avantageux d'injecter pendant cette étape CR de l'eau (H₂O) pour faciliter le broyage. Ensuite, l'étape suivante DR consiste à sécher les particules ainsi obtenues. Comme on le verra plus loin, il est préférable en effet de contrôler la quantité d'eau que peuvent comporter ces particules avant l'étape générale de grillage suivante (ou « roasting »), en particulier si la phase précédente d'extraction du graphite présent en réacteur est réalisée sous eau.

Cette étape de grillage commence par une première opération RO1, à température élevée et typiquement comprise entre 1200 et 1500 °C (par exemple 1300°C), dans laquelle de la vapeur d'eau est injectée dans les particules de graphite. Il a été observé dans ces conditions que le tritium (H3) pouvait être piégé efficacement, ainsi que le chlore radioactif C136. En particulier, dans ces conditions, la vapeur d'eau vient s'insérer au coeur des particules de graphite, pour y réagir avec ces isotopes notamment. Cette opération RO1 prévoit en outre une injection d'hydrogène (H₂) car il a été observé que ce gaz (H₂) jouait le rôle de fluidifiant pour favoriser l'insertion de l'eau, en particulier dans les interstices de la matrice de graphite. C'est ainsi qu'une première partie du carbone 14 (C14) interstitiel est aussi piégée par oxydation lors de la réaction avec la vapeur d'eau. Ces isotopes radioactifs sont alors piégés et isolés à l'étape ST1.

L'étape de grillage se poursuit ensuite par une opération RO2, d'oxydation « plus douce », par la réaction dite « de Boudouard » avec du monoxyde et/ou du dioxyde de carbone (CO-CO₂). En effet, si l'on poursuit une oxydation « agressive » par injection de vapeur d'eau, cette dernière s'insinue au-delà des interstices et réagit finalement avec un mélange de radionucléide C14 et d'isotope naturel C12, ce que l'on cherche à éviter pour ne pas devoir enterrer (ou décontaminer) les produits de cette réaction. C'est la raison pour laquelle on surveille à l'étape MON la quantité d'eau présente dans le réacteur de traitement de déchets. À cet effet, on peut prévoir une sonde capteur d'humidité installée in situ, ainsi qu'une voie d'évacuation d'eau pour gérer la quantité d'eau que comporte le réacteur. Au cours de ladite oxydation « plus douce » RO2, la température est abaissée à une gamme comprise entre 900 et 1100 °C (par exemple 1000°C). Il est injecté, dans une atmosphère de gaz neutre (par exemple de l'azote N₂), d'abord du dioxyde de carbone (CO₂) avec par exemple une proportion d'environ 25 % de dioxyde de carbone pour 75 % d'azote. Puis, à l'opération suivante RO3, la température est progressivement augmentée aux environs de 1100 °C et on diminue progressivement la quantité d'atomes d'oxygène dans le gaz injecté, en prévoyant par exemple un mélange de monoxyde de carbone et dioxyde de carbone (CO-CO₂) et/ou une dilution croissante du monoxyde-dioxyde de carbone dans le gaz neutre. Par exemple, un mélange de 50 % de monoxyde de carbone et de 50 % de dioxyde de carbone peut être dilué à 15 % dans de l'azote, puis à 10 % dans de l'azote. Cette oxydation plus « douce » vient piéger progressivement tout le carbone 14 encore présent dans la matrice de graphite à l'étape ST2, sans toutefois faire réagir les atomes C12, lesquels sont plus « attachés » à leur plan de graphène.

L'étape de grillage se termine ensuite par une élévation de la température à environ 1600 °C (étape RO4). Cette dernière opération a pour vocation d'éjecter les derniers atomes de chlore pouvant être présents encore dans la matrice de graphite (isotope C136 récupéré à l'étape ST3). Il convient d'observer qu'une température aussi élevée favorise une mobilité atomique permettant de récupérer le C136, mais produit aussi un effet de « recuit » dans la matrice, avec une cicatrisation des irrégularités et interstices grâce à la mobilité des atomes à une telle température. On enferme ainsi les éventuels atomes résiduels d'isotope C14 en coeur de matrice. Toutefois, il a été observé que la radioactivité éventuellement restante dans ce graphite décontaminé et restructuré, qui est faible, n'est en outre que très difficilement relâchée, voire quasiment scellée, ce qui le rend apte à un stockage en surface ou en sub-surface dans des conditions de sûreté très largement améliorées par rapport à celles du matériau poreux d'origine (c'est-à-dire du graphite irradié d'origine non traité).

Le procédé peut alors se terminer par une étape optionnelle SR (représentée en traits pointillés) consistant en un reformage à la vapeur (ou « steam reforming ») habituellement opéré à une température comprise entre 1200 et 1500°C (par exemple 1300°C), avec injection de vapeur d'eau pour oxyder le carbone de la matrice graphite. À titre de précaution, il peut encore être décidé d'isoler le produit de cette réaction dans un premier temps, pour décontamination et/ou confinement, mais de rejeter ensuite à l'air libre le produit gazeux de cette réaction après le premier temps précité, lors d'une étape d'évacuation des fumées EV (sous forme de monoxyde et/ou dioxyde de carbone), conformément au procédé décrit dans le document FR-2943167.

A l'étape de fin ST, le carbone gazéifié sous forme de monoxyde et/ou dioxyde de carbone, issu des réactions successives d'oxydation (et comportant donc essentiellement l'isotope C14), est ensuite séparé de la vapeur et des autres gaz (par exemple N₂ et H₂), puis solidifié par réaction de précipitation solide (avec de la chaux vive par exemple pour former du CaCO₃) afin d'être confiné dans un conteneur et enterré durablement.

Bien entendu, les quantités de gaz réactifs injectés et les durées de réaction dépendent de la quantité de déchets introduites dans le réacteur. Néanmoins, il est donné ci-après des explications techniques permettant à un homme du métier d'optimiser sans difficultés excessives de tels paramètres pour la mise en oeuvre du traitement selon l'invention.

Lors de la première phase de broyage, habituellement par écrasement (ou « crushing »), du fait que le graphite irradié soit initialement stocké sous eau, du tritium est largement relâché hors du graphite.

Par ailleurs, le chlore 36 est aussi probablement fortement décontaminé dès le séjour en eau du graphite (dans le cas où il est fait le choix d'un démantèlement sous eau pour un réacteur graphite gaz typiquement).

En conséquence, l'efficacité du traitement à prévoir porte alors essentiellement sur le carbone 14.

A cet effet, comme présenté ci-avant, la taille des particules a une influence importante. Toutefois, elle doit être optimale : si le diamètre est élevé, un régime de diffusion des gaz de purge (servant à l'oxydation) s'établit, mais la vitesse de gazéification diminue. Néanmoins, la sélectivité du piégeage de C14 par rapport au C12 dépend de l'existence de ce régime de diffusion.

Les paramètres de réaction ayant une influence sur la cinétique de gazéification des matériaux carbonés, sont en particulier la température, la pression et la taille des particules.
- Si la température augmente :
   - la vitesse de réaction augmente,
   - mais on passe d'un régime de diffusion interne, favorable, à une diffusion externe non sélective ;
- Si le diamètre des particules augmente :
   - on tend vers un régime de diffusion favorable,
   - mais la vitesse de gazéification globale diminue bien que la sélectivité dépende du régime de diffusion ;
- Si la pression augmente :
   - la vitesse de réaction augmente,
   - on observe un palier à une certaine pression partielle selon la température.

Dans les procédés décrits ci-avant, le grillage en particulier s'effectue en très légère surpression par rapport à la pression atmosphérique.

Outre l'influence de ces paramètres, le choix des gaz successivement utilisés pendant les traitements est aussi déterminant, bien entendu. Ainsi, pour obtenir dès le début des traitements une fluidité satisfaisante du déchet graphite, on injecte de l'hydrogène (H₂). Ensuite, pour la décontamination « agressive » du carbone 14 (C14), du tritium (H3) et du chlore 36 (C136), on utilise une injection de vapeur. On utilise ensuite un mélange de monoxyde de carbone (CO) et de dioxyde de carbone (CO₂) (selon la réaction de Boudouard : C(_{solide)}+ CO_{2(gazeux)} →2CO_{(gazeux)}) pour une isolation plus douce (oxydation plus sélective) du C14. On met en oeuvre en particulier un mécanisme de chimie-sorption du CO₂ avec formation d'un complexe C(O) sur un site actif (typiquement une irrégularité en bord de feuillets de la matrice graphite) selon une réaction du type C(_{solide)} + CO_{1-2(gazeux)}→C(O) + CO_{(gazeux)}

La dilution progressive dans le gaz neutre du CO-CO₂ gazeux injecté favorise une désorption du CO gazeux hors de la matrice graphite, lequel contient l'isotope radioactif C14 et peut être alors isolé, solidifié et stocké.

Ainsi, le traitement par injection de monoxyde et dioxyde de carbone (CO-CO₂) selon la réaction de Boudouard permet de décontaminer le graphite, dans ses zones les plus déstructurées par l'irradiation, de façon douce et sans perte de masse importante. En effet, les surfaces à atomes de carbone libres en site (sur lesquelles donc ces atomes sont les plus accessibles) sont les premières à réagir. Il s'agit d'endroits de la matrice graphite comportant beaucoup de pores et correspondant à du graphite déstructuré, donc très irradié. Ce mode d'oxydation n'atteint pas, en revanche, l'intérieur de la matrice graphite. Seul le graphite accessible (comportant le plus probablement le C14) est piégé.

L'intérêt d'un mélange CO-CO₂ s'explique par le fait que le CO₂ (à 25% dans le mélange) est très réactif. Son utilisation dans un mélange avec du CO présente un fort intérêt. Le mélange CO/CO₂ peut alors être dosé pour diminuer la réactivité de la solution (en particulier quand le graphite est poreux). En outre, pour une même concentration de CO₂, il apparaît qu'un mélange CO₂/CO limite mieux la perte de masse qu'un mélange CO₂/N₂.

Ensuite, la montée en température élevée (de l'ordre de 1600°C) est effectuée après décontamination de la matrice en C14 car une montée forte en température risque de « cicatriser » le graphite et de sceller, en quelque sorte, en interne, un reliquat d'atomes C14 dans une matrice restaurée. En effet, ce phénomène de « guérison » (cicatrisation du graphite) n'est pas particulier à l'énergie interne de la matrice puisqu'il apparaît aussi, pour d'autres propriétés physiques de graphite irradié, à des températures analogues de recuit. Il correspond en réalité à une disparition des défauts créés dans le graphite par l'irradiation neutronique qui peut être interprétée qualitativement : les défauts créés par irradiation dans le graphite sont tous de nature interstitielle. Les atomes interstitiels se groupent en amas entre les couches cristallines et la recombinaison des amas d'atomes interstitiels avec les lacunes ne peut se produire que si la mobilité des lacunes est suffisante. Cette mobilité permet alors une « guérison » des dommages et la mobilité des lacunes semble devenir importante à partir de 1200 à 1500°C, ce qui explique cet effet de cicatrisation au-delà de cette température de recuit.

Plus particulièrement, les amas d'atomes interstitiels peuvent atteindre de grandes dimensions aux hautes doses d'irradiation et se regrouper en assemblages cristallographiques hexagonaux, possédant des liaisons de covalence similaires à ceux de la couche de graphite. Ces amas hexagonaux commencent à disparaître vers 1200°C lorsque la mobilité des lacunes devient suffisamment importante. Cependant, aux doses d'irradiation plus élevées, les lacunes peuvent à leur tour former des assemblages dont l'énergie de migration est supérieure à celles des lacunes isolées. Dans ce cas, la guérison thermique des défauts est obtenue à des températures de recuit encore supérieures, typiquement supérieures à 1500°C.

Cette étape permet toutefois de libérer la totalité du chlore 36 et du tritium encore présent en coeur de matrice.

Habituellement, l'essentiel du carbone 14 (C14) à piéger et du chlore 36 (C136) se retrouve en position interstitielle ou en bord de feuillet. Or, à 1600°C, le graphite est restructuré (quelle que soit la rampe de température et quelle que soit l'histoire du graphite, comme expliqué ci-dessus). Même si cette restructuration n'est que partielle, comme on « guérit » les lacunes et les interstices, le chlore 36 et le tritium sont éjectés.

Si la performance, en termes de décontamination du carbone 14 est suffisante, on détruit ensuite la matrice graphite restante. Sinon, le procédé peut être poursuivit par un stockage en surface des déchets secondaires solides ou un enterrement en sous-surface. Les conditions de lixiviation et de dégazage obtenu sur le graphite ainsi traité sont en tout état de cause de nature à autoriser un stockage superficiel (enterrement sous surface voire en surface et non pas « sous colline » comme dans certains cas).

On se réfère maintenant à la figure 2, sur laquelle on a représenté une installation pour la mise en oeuvre du procédé ci-avant. Sur la figure 2, il a été représenté une installation compacte pour la mise en oeuvre du procédé. Toutefois, dans une variante, il peut être prévu d'éclater certains postes de traitement (par exemple les moyens de broyage M1, ou encore des réservoirs et fours ad hoc pour certaines étapes de traitement thermique).

L'installation comporte typiquement un broyeur M1 apte à transformer les déchets de graphite GR en particules PAR de diamètre compris par exemple entre 1 mm 10 mm. Ces moyens M1 sont généralement prévus directement en aval du four de traitement (par exemple en réacteur ou en entrepôt). Sur la figure 2, les moyens de broyage M1 sont représentés directement en aval du four. Toutefois, il est préférable que cette étape de broyage s'effectue en eau, dans un broyeur séparé, et que les particules issues de ce traitement soient séchées dans le four F avant grillage. Le four F comporte des moyens de traitement thermique MTT, ainsi que des moyens d'injection de gaz de purge choisis, avec :
- des moyens d'injection de vapeur M2 (H₂O), et des moyens de contrôle M3 de la teneur en eau dans le réacteur F pour réaliser la première étape de grillage (ou « Roasting ») à environ 1200°C à 1500°C et un peu au-dessus de la pression atmosphérique, permettant de libérer du tritium H3, du chlore C136 (la majeure partie étant libérée à cette étape) et du carbone C14,
- des moyens d'injection M3 d'hydrogène H₂ pour un cyclage favorisant la fluidité de l'interaction avec la vapeur injectée par les moyens M2,
- des moyens d'injections combinées M6 et M7 d'un mélange respectivement de monoxyde et de dioxyde de carbone (CO-CO₂), en proportions réglables par la mise en oeuvre d'un moyen de mélange contrôlé M5, et
- des moyens d'injection M4 de gaz neutre tel que de l'azote N₂ pour diluer le mélange d'oxydes de carbone.

Les moyens de traitement thermiques sont susceptibles d'appliquer des températures dans une gamme de 800 à 2000°C, par exemple de l'ordre de 900°C pour une oxydation douce selon la réaction de Boudouard à plus de 1500°C pour créer un dernier choc thermique en fin de traitement, comme indiqué précédemment.

L'installation peut comporter un même poste ou un poste séparé pour une étape ultérieure (optionnelle et donc aucunement essentielle) de reformage à la vapeur (ou « Steam Reforming ») par exemple à environ 1300°C (1200 à 1500°C typiquement).

Bien entendu, les moyens particuliers que comporte l'installation peuvent être adaptés au type de déchets à traiter.

Par exemple, l'injection de vapeur d'eau H₂O et d'hydrogène H₂ (selon l'étape RO1 décrite ci-avant) est préférentiellement lié au temps de séjour du graphite en eau pendant le démantèlement des déchets. Il est alors préférable de contrôler finement *in situ* la quantité de vapeur d'eau injectée dans le réacteur de grillage F de la figure 2 (four appelé « roaster » en anglais) afin d'éviter des pertes de masse trop importantes de la matrice graphite et ainsi une trop grande quantité de matière à stocker.

La vapeur d'eau a deux origines :
o celle issue du mouillage du graphite pendant la phase de démantèlement du réacteur (lorsqu'on a choisi un mode de démantèlement sous eau du réacteur gaz graphite),
o celle injectée, pour traiter ce graphite en mode de vaporéformage.

Une instrumentation *ad hoc* est installée au niveau du gaz injecté dans le roaster F pour maitriser la quantité de vapeur injectée. De plus, il est prévu une mesure de la vapeur d'eau se condensant en sortie du roaster. La différence entre la masse d'eau injectée en entrée et la masse d'eau collectée en sortie fournit avantageusement la masse d'eau due au trempage initial du graphite.

Ainsi, la quantité de vapeur présente est contrôlée en permanence.

On a résumé ci-après les principales étapes mises en oeuvre dans le traitement opéré, comme suit :
- injection d'eau H₂O en quantité préférablement limitée par suivi des évacuations de vapeur (compte tenu d'une humidité initiale des déchets) : cette étape permet l'évacuation du C14 et du HC1 et de la majeure partie du tritium, avec une perte de masse très faible ;
- injection de CO-CO₂ selon une oxydation douce des zones déstructurées : cette étape permet une sortie du C14, avec une perte de masse associée à nouveau très faible ;
- montée en température raide (jusqu'à 1600°C) et sous atmosphère inerte (par exemple de l'azote) pour une restructuration du graphite : cette étape permet une sortie du C136 et du reliquat éventuel de tritium.

Après obtention d'un graphite suffisamment décontaminé, les déchets restants peuvent être :
- stockés dans un centre en surface ou enterrés en l'état,
- ou, si la décontamination est suffisamment atteinte (décontamination de l'ordre de 95% avec une perte de masse associée de l'ordre de 5%), détruits par un procédé de vapo-réformage (ou « steam reforming ») en effectuant avantageusement des rejets libres comme décrit dans le document FR-2943167.

## Revendications

1. Procédé de décontamination de matériau carboné radioactif, notamment de graphite, comportant une injection de vapeur d'eau dans ledit matériau, concomitamment à un premier traitement thermique de grillage du matériau à une température comprise entre 1200 et 1500°C (RO1), la vapeur d'eau étant injectée par des moyens d'injection de vapeur (M2) avec un agent fluidifiant gazeux, comportant de l'hydrogène H₂, l'agent fluidifiant gazeux étant injecté par des moyens d'injection de l'hydrogène H₂ (M3).

2. Procédé selon la revendication 1, dans lequel la vapeur d'eau est injectée dans un réacteur (F) dont la teneur en eau est mesurée pour contrôler la quantité de vapeur d'eau injectée.

3. Procédé selon la revendication 2, dans lequel le premier traitement thermique (RO1) est précédé d'une étape de séchage du matériaux (DR) pour contrôler la quantité d'eau présente dans le réacteur (F).

4. Procédé selon l'une des revendications précédentes, dans lequel une température d'environ 1300°C est appliquée pendant le premier traitement thermique (RO1).

5. Procédé selon l'une des revendications précédentes, comportant en outre un deuxième traitement thermique (RO2) de grillage avec injection d'oxyde de carbone gazeux.

6. Procédé selon la revendication 5, dans lequel le deuxième traitement thermique (RO2) est effectué à une température comprise entre 900 et 1100°C.

7. Procédé selon l'une des revendications 5 et 6, dans lequel l'oxyde de carbone gazeux est dilué dans un gaz neutre.

8. Procédé selon la revendication 7, dans lequel la dilution de l'oxyde de carbone gazeux augmente pendant le deuxième traitement thermique (RO2) d'environ une proportion de 75% de gaz neutre à environ 90% de gaz neutre en fin de deuxième traitement thermique.

9. Procédé selon l'une des revendications 5 à 8, dans lequel la température appliquée pendant le deuxième traitement thermique (RO2) est comprise entre 900 et 1100°C en augmentant jusqu'à environ 1100°C en fin de deuxième traitement thermique (RO2).

10. Procédé selon l'une des revendications 5 à 9, dans lequel l'oxyde de carbone gazeux comporte du dioxyde de carbone et une proportion croissante de monoxyde de carbone.

11. Procédé selon la revendication 10, dans lequel la proportion de monoxyde de carbone augmente de 0 à environ 50% en fin de deuxième traitement thermique (RO2).

12. Procédé selon l'une des revendications précédentes, comportant un troisième traitement thermique (RO3) en fin de grillage du matériau par une élévation de température comprise entre 1500 et 1600°C.

13. Procédé selon l'une des revendications précédentes, dans lequel le grillage est précédé d'un broyage du matériau (CR) en particules de diamètre compris entre 1 et 10 mm.

14. Installation pour la mise en oeuvre du procédé selon l'une des revendications précédentes, comportant au moins un réacteur de traitement thermique (F) et au moins une entrée de gaz (M2) pour une injection de vapeur d'eau;
l'installation étant **caractérisée en ce qu'**elle comporte en outre des moyens d'injection de l'hydrogène H₂ (M3) pour une injection d'un agent fluidifiant gazeux, comportant de l'hydrogène H₂.

## Patentansprüche

1. Verfahren zum Dekontaminieren von radioaktivem kohlenstoffhaltigen Material, insbesondere von Graphit, umfassend ein Einspritzen von Wasserdampf in das Material gleichzeitig mit einer ersten Wärmebehandlung durch Rösten des Materials bei einer Temperatur zwischen 1200 und 1500 °C (RO1), wobei der Wasserdampf durch Dampfeinspritzmittel (M2) mit einem gasförmigen Verflüssigungsmittel eingespritzt wird, das Wasserstoff H₂ umfasst, wobei das gasförmige Verflüssigungsmittel durch Einspritzmittel des Wasserstoffs H₂ (M3) eingespritzt wird.

2. Verfahren nach Anspruch 1, wobei der Wasserdampf in einen Reaktor (F) eingespritzt wird, dessen Wassergehalt gemessen wird, um die Menge des eingespritzten Wasserdampfes zu kontrollieren.

3. Verfahren nach Anspruch 2, wobei der ersten Wärmebehandlung (RO1) ein Schritt des Trocknens des Materials (DR) vorausgeht, um die Menge an Wasser zu kontrollieren, die in dem Reaktor (F) vorhanden ist.

4. Verfahren nach einem der vorangehenden Ansprüche, wobei eine Temperatur von etwa 1.300 °C während der ersten Wärmebehandlung (RO1) angewendet wird.

5. Verfahren nach einem der vorangehenden Ansprüche, ferner umfassend eine zweite Wärmebehandlung (R02) durch Rösten mit Einspritzen von gasförmigem Kohlenstoffoxid.

6. Verfahren nach Anspruch 5, wobei die zweite Wärmebehandlung (R02) bei einer Temperatur zwischen 900 und 1.100 °C durchgeführt wird.

7. Verfahren nach einem der Ansprüche 5 und 6, wobei das gasförmige Kohlenstoffoxid in einem neutralen Gas verdünnt wird.

8. Verfahren nach Anspruch 7, wobei sich die Verdünnung des gasförmigen Kohlenstoffoxids während der zweiten Wärmebehandlung (R02) von einem Anteil von etwa 75 % an neutralem Gas auf etwa 90 % an neutralem Gas am Ende der zweiten Wärmebehandlung erhöht.

9. Verfahren nach einem der Ansprüche 5 bis 8, wobei die Temperatur, die während der zweiten Wärmebehandlung (R02) angewendet wird, zwischen 900 und 1.100 °C beträgt und dabei bis auf etwa 1.100 °C am Ende der zweiten Wärmebehandlung (R02) ansteigt.

10. Verfahren nach einem der Ansprüche 5 bis 9, wobei das gasförmige Kohlenstoffoxid Kohlenstoffdioxid und einen steigenden Anteil an Kohlenstoffmonoxid umfasst.

11. Verfahren nach Anspruch 10, wobei sich der Anteil an Kohlenstoffmonoxid von 0 auf etwa 50 % am Ende der zweiten Wärmebehandlung (R02) erhöht.

12. Verfahren nach einem der vorhergehenden Ansprüche, umfassend eine dritte Wärmebehandlung (R03) am Ende des Röstens des Materials durch ein Erhöhen der Temperatur zwischen 1.500 und 1.600 °C.

13. Verfahren nach einem der vorhergehenden Ansprüche, wobei dem Rösten ein Zerkleinern des Materials (CR) in Teilchen mit einem Durchmesser zwischen 1 und 10 mm vorausgeht.

14. Anlage zum Umsetzen des Verfahrens nach einem der vorangehenden Ansprüche, umfassend mindestens einen Reaktor zur Wärmebehandlung (F) und mindestens einen Gaseinlass (M2) für ein Einspritzen von Wasserdampf,
wobei die Anlage **dadurch gekennzeichnet ist, dass** sie ferner Einspritzmittel des Wasserstoffs H₂ (M3) für ein Einspritzen eines gasförmigen Verflüssigungsmittels, das Wasserstoff H₂ umfasst, aufweist.

## Claims

1. Method for decontamination of radioactive carbonaceous material, in particular graphite, comprising an injection of steam into said material simultaneous to a first heat treatment of roasting the material at a temperature of between 1200 and 1500°C (RO1), the steam being injected by steam injecting means (M2) with a gaseous flow improving agent comprising hydrogen H₂, the gaseous flow improving agent being injected by hydrogen H₂ injection means (M3).

2. Method according to claim 1, wherein the steam is injected into a reactor (F) where the water content is measured in order to control the amount of steam injected.

3. Method according to claim 2, wherein the first heat treatment (RO1) is preceded by a step of drying (DR) the material in order to control the amount of water present in the reactor (F).

4. Method according to one of the preceding claims, wherein a temperature of about 1300°C is applied during the first heat treatment (RO1).

5. Method according to one of the preceding claims, further comprising a second heat treatment (RO2) of roasting with injection of gaseous oxocarbon.

6. Method according to claim 5, wherein the second heat treatment (RO2) is performed at a temperature of between 900 and 1100°C.

7. Method according to one of claims 5 and 6, wherein the gaseous oxocarbon is diluted in an inert gas.

8. Method according to claim 7, wherein the dilution of the gaseous oxocarbon increases during the second heat treatment (RO2) from a proportion of about 75% inert gas to about 90% inert gas at the end of the second heat treatment.

9. Method according to one of claims 5 to 8, wherein the temperature applied during the second heat treatment (RO2) is between 900 and 1100°C, increasing to about 1100°C at the end of the second heat treatment (RO2).

10. Method according to one of claims 5 to 9, wherein the gaseous oxocarbon comprises carbon dioxide and an increasing proportion of carbon monoxide.

11. Method according to claim 10, wherein the proportion of carbon monoxide increases from 0 to about 50% at the end of the second heat treatment (RO2).

12. Method according to one of the preceding claims, comprising a third heat treatment (RO3) at the end of roasting the material, by increasing the temperature to between 1500 and 1600°C.

13. Method according to one of the preceding claims, wherein the roasting is preceded by crushing (CR) the material into particles between 1 and 10 mm in diameter.

14. Facility for implementing the method according to one of the preceding claims, comprising at least one heat treatment reactor (F) and at least one gas inlet (M2) for the injection of at least steam,
the facility being **characterized in that** it comprises further hydrogen H₂ injection means (M3) for injecting a gaseous flow improving agent comprising hydrogen H₂.
